**Europäisches Patentamt**

**European Patent Office**

**Office européen des brevets**

(11) Veröffentlichungsnummer: **0 341 485 B1**

# EUROPÄISCHE PATENTSCHRIFT

(45) Veröffentlichungstag der Patentschrift: **11.11.92**

(51) Int. Cl.⁵: **B23C  3/34**, B23G 1/32,
B23F 13/02

(21) Anmeldenummer: **89107501.2**

(22) Anmeldetag: **26.04.89**

Verbunden mit 89905105.6/0413725
(europäische
Anmeldenummer/Veröffentlichungsnummer)
durch Entscheidung vom 11.12.91.

(54) **Verfahren zum Schneiden der Flanken von Einteilschnecken und Einteilschnecken-Schneidemaschine.**

(30) Priorität: **27.04.88 DE 3814241**

(43) Veröffentlichungstag der Anmeldung:
**15.11.89 Patentblatt  89/46**

(45) Bekanntmachung des Hinweises auf die
Patenterteilung:
**11.11.92 Patentblatt  92/46**

(84) Benannte Vertragsstaaten:
**AT BE CH ES FR GB GR IT LI NL SE**

(56) Entgegenhaltungen:

**AIRCRAFT PRODUCTION, Mai 1953, Seiten
162-168, Iliffe Production Publications Ltd,
London, GB; H.J. PEARSON: "Machining a
variable-lead and variable core-diameter helical form"**

(73) Patentinhaber: **KRONES AG Hermann Kronseder Maschinenfabrik
Böhmerwaldstrasse 5 Postfach 1230
W-8402 Neutraubling(DE)**

(72) Erfinder: **Meichel, Otto
Nelkenweg 5
W-8402 Neutraubling(DE)**

## Beschreibung

Die Erfindung betrifft ein Verfahren zum Schneiden der Flanken von Einteilschnecken sowie eine Einteilschnecken-Schneidemaschine gemäß den Oberbegriffen der Patentansprüche 1 und 4.

Einteilschnecken der betrachteten Art werden in Behälterabfüllanlagen wie beispielsweise Flaschenabfüllanlagen eingesetzt, um eine ankommende Folge von Behältern auf einen bestimmten Abstand einzustellen, der dem jeweiligen Maschinenteilungsabstand entspricht. Zu demselben Zweck werden solche Einteilschnecken auch zwischen aufeinanderfolgenden Stationen einer Abfüllanlage angeordnet, damit die Behälter in einem vorbestimmten Abstand voneinander überführt werden.

Damit die Behälter, die im allgemeinen zunächst ohne Abstand oder in einem geringen Abstand von einander der Einteilschnecke zugeführt werden, auf einen vorbestimmten größeren Abstand gebracht werden, ist in die Einteilschnecke eine spiralförmige Nut eingeschnitten, deren Flankensteigung über die Länge der Einteilschnecke variiert, und zwar in diesem Falle derart, daß die Steigung vom Einlauf der Behälter in die Einteilschnecke zu deren Auslauf hin zunimmt.

Die spiralförmige Nut wird mittels eines mit großer Drehzahl rotierenden Schneidwerkzeugs in einen Einteilschneckenrohling geschnitten, der mit einer sehr viel geringeren Drehzahl rotiert, während entweder das Schneidwerkzeug oder die Einteilschnecke mit variabler Geschwindigkeit in axialer Richtung bewegt wird. Wenn die herzustellende Einteilschnecke zur Handhabung von rotationssymmetrischen Gefäßen vorgesehen ist, wird das rotierende Schneidwerkzeug in der Weise gegenüber dem Einteilschneckenrohling angeordnet, daß die Welle des Schneidwerkzeugs senkrecht zur Längsachse des Einteilschneckenrohlings verläuft. Das Schneidwerkzeug hat eine geradlinige Schneidkante und schneidet die spiralförmige Nut unabhängig von momentaner Schneckensteigung mit der erforderlichen Genauigkeit ohne einen Flankenfehler, so daß die Herstellung einer Einteilschnecke für rotationssymetrische Behälter weitgehend problemlos ist.

Wenn die Einteilschnecke jedoch zur Handhabung nicht rotationssymmetrischer Formgefäße bestimmt ist, sollte sie eine spiralförmige Nut mit einer Querschnittsfläche haben, die an diejenige des zu handhabenden Formgefäßes angepaßt ist. Zum Schneiden der spiralförmigen Nut wird in einem solchen Falle die Anordnung so getroffen, daß die Welle des Schneidwerkzeugs parallel zur Längsachse des Einteilschneckenrohlings verläuft.

Wenn hierbei das Schneidwerkzeug eine Form hat, die exakt mit der zugehörigen Querschnittsfläche des zu handhabenden Formgefäßes übereinstimmt, entsteht beim Schneiden der Nut infolge deren veränderlicher Steigung ein mit zunehmender Steigung größer werdender Schneckenflankenfehler, d.h. die spiralförmige Nut wird mit zunehmend größer werdender Steigung enger, wodurch ein Schrägstellen oder gar ein Zerquetschen der Gefäße eintritt. Dieser Schneckenflankenfehler wird bisher dadurch korrigiert, daß das eingesetzte Schneidwerkzeug eine gewisse Übergröße hat, was jedoch mit dem Nachteil verbunden ist, daß die eingeschnittene spiralförmige Nut nur bei einer ganz bestimmten Steigung mit dem zu handhabenden Formgefäß übereinstimmt. An den übrigen Bereichen der Einteilschnecke werden die Formgefäße hingegen nicht einwandfrei erfaßt und geführt, da die Steigung üblicherweise von Schneckenanfang bis zum -ende hin zunimmt.

Der vorliegenden Erfindung liegt die Aufgabe zugrunde, ein Verfahren zum Schneiden der Flanken von Einteilschnecken der betrachtenden Art so weiterzuentwickeln, daß die Entstehung eines Schneckenflankenfehlers bei variablen Schneckensteigungen weitestgehend vermieden wird. Außerdem soll eine Einteilschnecken-Schneidemaschineangegeben werden, mit der eine auf den zugehörigen Querschnitt eines zu handhabenden Formgefäßes abgestimmte Nut in einen Einteilschneckenrohling ohne einen Schneckenflankenfehler bei variablen Steigungen einschneidbar ist.

Dies wird erfindungsgemäß durch die im Kennzeichen der Patentansprüche 1 und 4 angegebenen Merkmale gelöst. Vorteilhafte Weiterbildungen der Erfindung sind in den Unteransprüchen gekennzeichnet.

Bei dem erfindungsgemäßen Verfahren wird das rotierende Schneidwerkzeug während des Schneidvorganges oszillierend aufwärts und abwärts bewegt. Dies hat zur Folge, daß das Schneidwerkzeug die später von der Einteilschnecke erfaßte Gefäßkontur beschreibt, wodurch die Entstehung der bisher üblichen Flankenfehler vermieden wird, so daß ein Schneidwerkzeug verwendet werden kann, dessen Konturen mit dem zugehörigen Querschnittsabschnitt der zu handhabenden Formgefäße übereinstimmt. Die Formgefäße werden damit über dem gesamten Bereich der Einteilschnecke einwandfrei erfaßt und geführt, so daß ein glatter Arbeitsablauf im Bereich der Einteilschnecke gewährleistet ist.

Um die Schneidemaschine und den Einteilschneckenrohling zu schonen und die Bearbeitungsgenauigkeit zu erhöhen, wird ferner vorgeschlagen, daß die spiralförmige Nut zunächst in vorzugsweise zwei aufeinanderfolgenden Schneidvorgängen ohne Oszillation des Schneidwerkzeugs vorgeschnitten wird und daß anschließend ein dritter Schneidvorgang mit der aufwärts und abwärts gerichteten Oszillation des Schneidwerkzeugs ausgeführt wird. Der dritte Schneidvorgang hat hierbei nur noch die Aufgabe, den bei den ersten beiden Schneidvorgängen erzeugten Flankenfehler zu beseitigen.

Gemäß der Erfindung wird vorgeschlagen, daß das rotierende Schneidwerkzeug mit einer Geschwindigkeit von 7 bis 8 Doppelhüben pro Sekunde aufwärts und abwärts bewegt wird, während das Schneidwerkzeug mit einer Drehzahl von etwa 3.800 bis 4.000 Umdrehungen pro Minute rotieren sollte.

Bei der erfindungsgemäßen Einteilschnecken-Schneidemaschine ist die Welle des Schneidwerkzeugs an einem Schlitten befestigt, der auf einer Führung senkrecht zur Längsachse der Einteilschnecke aufwärts und abwärts bewegbar angeordnet ist. Die oszillierende Bewegung des Schlittens wird vorteilhafterweise von einer über Motor angetriebenen Schubkurbel hervorgerufen. Die Hubhöhe des Schlittens sollte etwa 60 mm in beiden Richtungen betragen, wenn die zu bearbeitende Einteilschnekke den üblichen Durchmesser hat. Der Schlitten besteht zweckmäßigerweise aus Aluminiumguß, womit er ein verhältnismäßig geringes Gewicht hat.

Wenn die Welle des Schneidwerkzeugs mittels eines Riementriebs, vorzugsweise eines Zahnriementriebs, angetrieben wird, wie dies im allgemeinen der Fall ist, wird gemäß der Erfindung vorgeschlagen, daß ein erster Zahnriemen ein von einem Motor angetriebenes erstes Zahnrad mit einem Zwischenzahnrad verbindet, das über einen zweiten Zahnriemen ein fest auf der Welle des Schneidwerkzeugs sitzendes drittes Zahnrad antreibt, und daß das Zwischenzahnrad auf einem verschieblich gelagerten zweiten Schlitten angeordnet ist. Dieser zweite Schlitten sollte in einer zur Führung des ersten Schlittens senkrechten Richtung bezüglich der Einteilschnecke vorwärts und rückwärts bewegbar geführt sein. Diese Ausgestaltung hat den Vorteil, daß der Zahnriementrieb weitestgehend den Hubbewegungen des ersten Schlittens folgen kann, ohne daß die Zahnriemen übermäßig gedehnt werden. Da das Zwischenzahnrad der jeweiligen Bewegung des ersten Schlitten entsprechend durch eine horizontale Gleitbewegung des zweiten Schlittens folgen kann, ist eine entsprechende Dehnung des zugehörigen zweiten Zahnriemens praktisch vollständig vermieden, während der erste Zahnriemen bei der Bewegung des zweiten Schlittens nur eine geringfügige Dehnung erfährt, die im zulässigen Bereich liegt.

Mit großem Vorteil schlägt die Erfindung vor, daß der Schlitten mit dem Schneidwerkzeug, die Schubkurbel und der zugehörige Riementrieb an einem Rahmen befestigt sind, der um eine zur Längachse der Einteilschnecke senkrechte Achse schwenkbar gelagert ist, wobei dieser Schwenkwinkel 90° betragen sollte. Damit kann die Welle des Schneidwerkzeugs aus der zur Längsachse der Einteilschnecke parallelen Lage in eine zu dieser senkrechten Position verschwenkt werden, die sie zum Schneiden einer Einteilschnecke zur Handhabung von rotationssymmetrischen Behältern einnimmt. Damit ist die erfindungsgemäße Einteilschnecken-Schneidemaschine zur Herstellung beider Arten von Einteilschnecken verwendbar, wobei der Schneidvorgang der den rotationssymmetrischen Behältern entsprechenden Nut selbstverständlich ohne oszillierende Bewegung des Schneidwerkzeugs erfolgt.

Die jeweilige Arbeitslage des schwenkbaren Rahmens kann pneumatisch verriegelbar sein. Hierzu wird vorgeschlagen, daß ein pneumatisch beaufschlagter Verriegelungsbolzen mit einem sich verjüngenden Kopfabschnitt in eine entsprechend geformte Aussparung des schwenkbaren Rahmens eintritt. Wenn der Rahmen in die jeweils andere Arbeitslage verschwenkt werden soll, wird der Verriegelungsbolzens aus der Aussparung des Rahmens zurückgezogen.

Weitere Einzelheiten der Erfindung ergeben sich aus der nachfolgenden Beschreibung einer bevorzugten Ausführungsform einer Einteilschnecken-Schneidemaschine sowie anhand der Zeichnung. Dabei zeigen:

Fig. 1    eine Prinzipskizze zur Erläuterung des erfindungsgemäßen Verfahrens

Fig. 2    eine Seitenansicht der Einteilschnecken-Schneidemaschine in einer weitgehend schematischen Darstellung;

Fig. 3    eine Vorderansicht der Schneidemaschine gemäß Fig. 1

Fig. 4    eine Aufsicht auf die Schneidemaschine und

Fig. 5    die pneumatische Verriegelung des schwenkbaren Rahmens der Schneidemaschine in einer vergrößerten Darstellung.

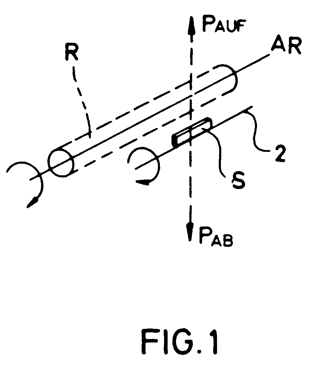

In der Fig. 1 ist eine Prinzipskizze gezeigt, anhand derer zunächst das erfindungsgemäße Verfahren erläutert wird. Mit R ist in der Fig. 1 ein Rohling bezeichnet, der aus einem zylindrischen Vollmaterial, beispielsweise aus Kunststoff besteht. In diesem Rohling R soll nun eine Gewindesteigung zur Herstellung einer Einteilschnecke für Formgefäße eingeschnitten werden. Das Schneiden des Rohlings geschieht mit Hilfe des Schneidwerkzeuges S, das gegen den Rohling angestellt werden kann und mit hoher Drehzahl um die Welle 2 angetrieben wird. Der Rohling dreht um die Achse $A_R$ im Uhrzeigersinn oder entgegen Uhrzeigersinn. Die Form des Schneidwerkzeugs S ist auf die Form von später mit der Einteilschnecke zu transportierenden Formgefäßen abgestimmt. Wenn die Welle 2 des Schneidwerkzeugs S gegen den Rohling angestellt wird, schneidet das Schneidwerkzeug S eine der Form des Schneidwerkzeugs entsprechende Vertiefung in den Rohling ein. Die Welle 2 verläuft dabei parallel zur Achse $A_R$ des Rohlings. Durch eine koordinierte Relativbewegung von Schneidwerkzeug S einerseits und Rohling R andererseits im Verlaufrichtung der Achse $A_R$ bzw. der Welle 2 läßt sich in den Rohling das entsprechende Gewinde mit einer gewünschten, sich verändernden Steigung einfräsen. Erfindungsgemäß wird nun während dieses Fräsvorgangs die Welle 2 des Schneidwerkzeugs S oszillierend in Richtung der Pfeile $P_{auf}$ $P_{ab}$ aufwärts und abwärts bewegt, was zur Folge hat, daß Schneckenflankenfehler vermieden werden, weil der Rohling an jeder Stelle, also unabhängig von der Steigung, die auf das zu transportierende Formgefäß angepaßte entsprechende Breite hat.

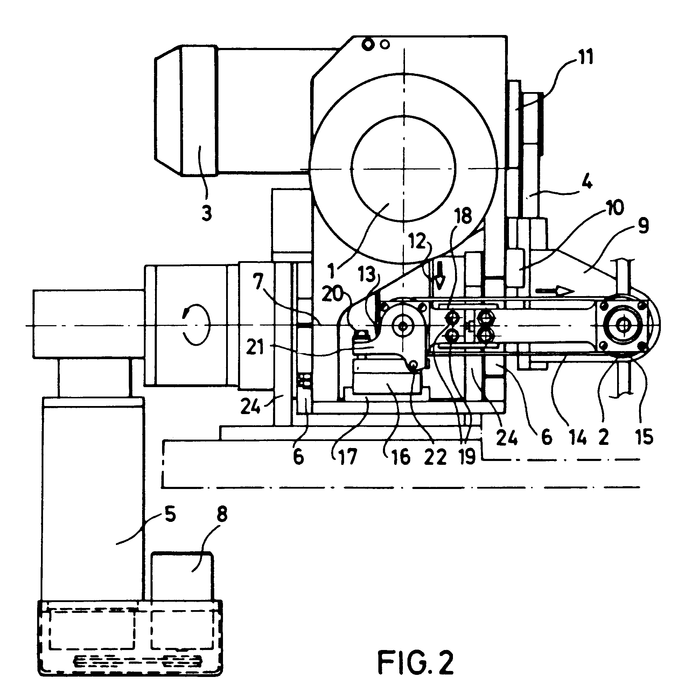

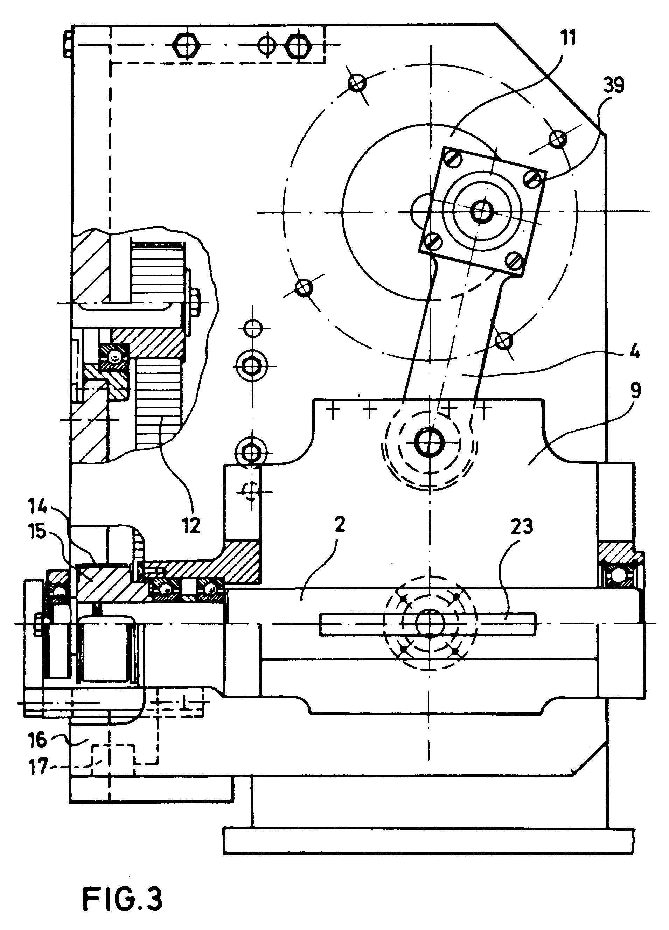

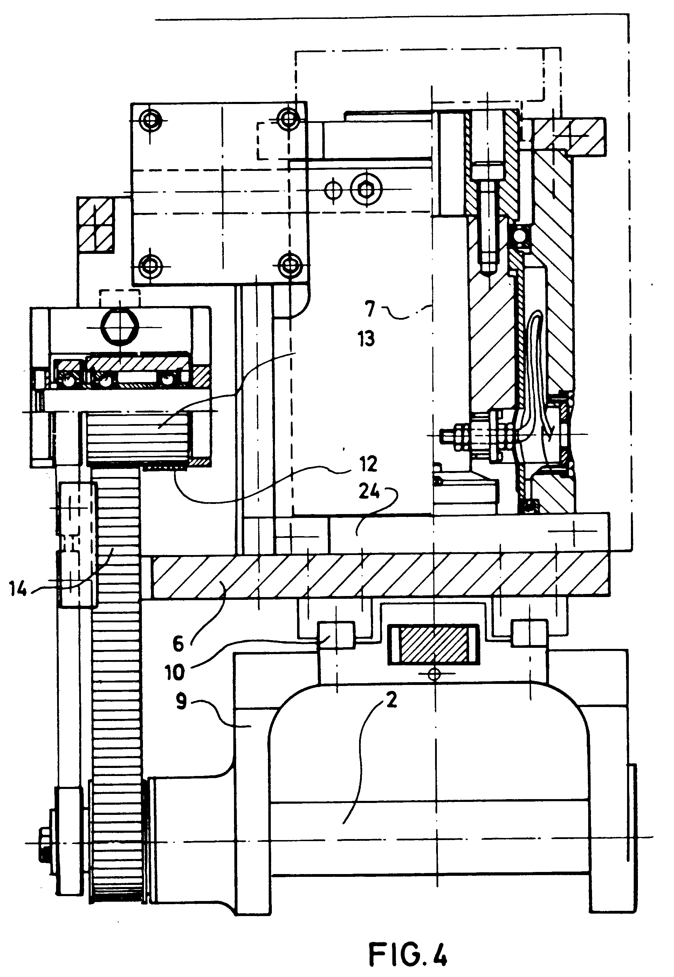

Eine Einteilschneckenschneidemaschine, mit der ein solches Schneideverfahren durchgeführt werden kann wird nun im folgenden anhand der Fig. 2 bis 5 beschrieben. In diesen Figuren ist die eigentliche Schneidemaschine dargestellt, während die Einrichtung zum drehbaren Halten des zu bearbeitenden Einteilschneckenrohlings R nicht dargestellt ist. Die Schneidemaschine umfaßt wie Fig. 2 schematisch zeigt, drei Antriebsmotoren, und zwar einen Antriebsmotor 1 für die Welle 2 des in Fig. 1 angedeuteten Schneidwerkzeugs S, einen Antriebsmotor 3 für eine Schubkurbel 4 und einen Antriebsmotor 5 zum Schwenken eines Rahmens 6 um eine Achse 7. Der Antriebsmotor 5 ist mit einem Drehgeber 8 verbunden. Die Welle 2 des Schneidwerkzeugs ist in einem Schlitten 9 drehbar gelagert. Der Schlitten 9 einerseits ist an einer Führung 10 auf und abwärts bewegbar angeordnet, so daß der Schlitten die in Fig. 1 mit $P_{auf}$ und $P_{ab}$ angedeutete oszillierende Auf- und Abbewegung des Schneidwerkzeugs S bewirkt. Zu diesem Zweck ist der Schlitten 9 mit einem unteren Ende der Schubkurbel 4 gelenkig verbunden. Das obere Ende der Schubkurbel ist exentrisch an einer Scheibe 11 angelenkt (vergleiche auch Fig. 3). Die Scheibe wird von dem Antriebsmotor 3 angetrieben. Durch diese Antriebsbewegung führt die Schubkurbel den Schlitten 9 aufwärts und abwärts, wodurch auch das Schneidwerkzeug dann zusätzlich zu der um die Welle 2 stattfindenden Drehbewegung oszillierend auf- und abwärts bewegt wird.

Der Antriebsmotor 1 dient zum Antrieb der Messerwelle 2. Hierzu ist der Antriebsmotor über einen ersten Zahnriemen 12 mit einem Zwischenzahnrad 13 verbunden, das über einen zweiten Zahnriemen 14 in Antriebsverbindung mit einem Zahnrad 15 steht, das wiederum mit der Welle 2 des Schneidwerkzeugs fest verbunden ist. Der zweite Zahnriemen 14 verläuft in der in Fig. 2 dargestellten Ruhestellung in einem Winkel von ca.

90° zu dem ersten Zahnriemen 12. Das Zwischenzahnrad 13 ist auf einem zweiten Schlitten 16 befestigt. Dieser Schlitten wiederum sitzt auf einer Führung 17 und ist in dieser Führung horizontal vorwärts und rückwärts bewegbar angeordnet. Zum Spannen des Zahnriemens 14 ist ein U-Profil 18 mit nicht näher dargestellten Langlöchern vorgesehen, die von Feststellschrauben 19 durchgriffen werden. Durch das Teil 18 wird zugleich eine Verbindung zwischen den Zahnrädern 13 und 15 hergestellt. Der Zahnriemen 12 wird durch Anziehen einer Schraubenmutter 20 vorgespannt, wodurch eine Halterung 21 für das Zwischenzahnrad 13 um eine Achse 22 verschwenkt wird, an der die Halterung 21 gelenkig mit dem Schlitten 16 verbunden ist.

Wenn die Scheibe 11, an der die Schubkurbel 4 exentrisch angelenkt ist, bei rotierender Welle 2 gedreht wird, ruft die Schubkurbel wie erwähnt eine aufwärts und abwärts oszillierende Bewegung des Schlittens 9 und der daran befestigten Welle 2 mit dem Schneidwerkzeug hervor, das in einem Schlitz 23 in der Welle (vergleiche Fig. 3) austauschbar befestigt ist. Die Hubbewegungen des Schlittens 9 würden an sich zu einer Längung des zweiten Zahnriemens 14 führen, da die Welle 2 nicht kreisförmig um die Achse des Zwischenzahnrades 13 hin- und herbewegt wird, sondern geradlinig in der Vertikalen über den Schlitten 9 auf- und abbewegt wird. Da jedoch der Schlitten 16 entlang der Führung 17 in horizontaler Ebene bewegbar gelagert ist, wird der Schlitten über den durch die Auf- und Abwärtsbewegung der Welle 2 hervorgerufenen Zug über das U-Profil 18 in der Fig. 2 bei jeder Auslenkbewegung nach rechts bewegt, so daß der Zahnriemen 14 keine Längenänderung erfährt. Die Verschiebung des Schlittens 16 mit dem darauf gehaltenen Zwischenzahnrad 13 führt lediglich zu einer geringfügigen Dehnung des Zahnriemens 12, die aber so gewählt werden kann, daß sie in einem zulässigen Bereich liegt.

Der Rahmen 6, an dem die Schubkurbel 4 mit der zugehörigen drehbaren Scheibe 11, der Schlitten 9, der Welle 2 und deren Antrieb befestigt sind, ist schwenkbar an einem feststehenden Rahmen 24 angelenkt, wobei der Mittelpunkt der Welle 2 und des Schlitzes 23 zur Aufnahme des Werkzeugs auf der Schwenkachse 7 liegen. Durch Schwenken des Rahmens 6 um 90° wird die Welle 2 aus ihrer in den Figuren dargestellten horizontalen Lage in die vertikale Position verschwenkt, in der Einteilschnecken für rotationssymmetrische Behälter ohne Oszillation geschnitten werden.

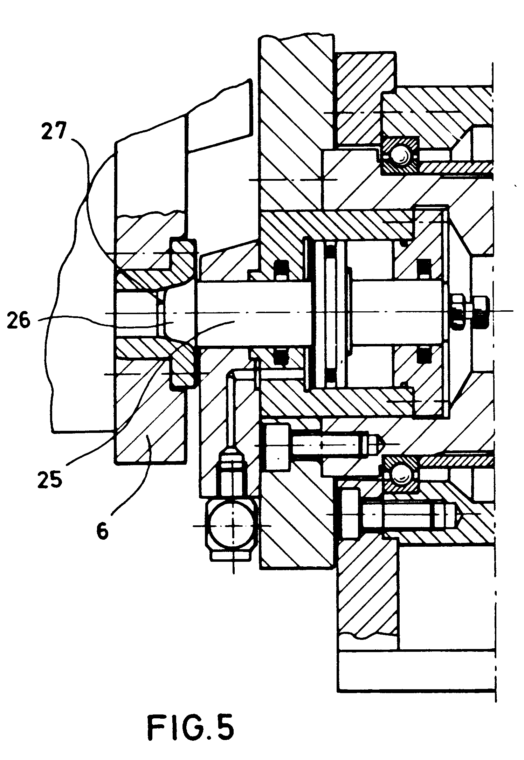

In der jeweiligen Arbeitsposition des Schwenkrahmens 6 tritt ein pneumatisch beaufschlagter Verriegelungsbolzen 25 mit einem konisch sich verjüngenden Kopfabschnitt 26 in eine entsprechend geformte Aussparung 27 des schwenkbaren Rahmens 6 ein, um diesen in der Arbeitsposition zu verriegeln (Fig. 5).

## Patentansprüche

1. Verfahren zum Schneiden der Flanken von Einteilschnecken, bei dem ein mit großer Drehzahl rotierendes Schneidwerkzeug (S) mit zur Längsachse (AR) einer Einteilschnecke paralleler Rotationsachse in Eingriff mit einem mit kleiner Drehzahl rotierenden Rohling (R) einer Einteilschnecke gebracht wird, während das Schneidwerkzeug (S) oder die Einteilschnecke mit variabler Geschwindigkeit in axialer Richtung bewegt wird, dadurch gekennzeichnet, daß das rotierende Schneidwerkzeug oszillierend aufwärts und abwärts, senkrecht zur Längsachse der Einteilschnecke, bewegt wird.

2. Verfahren nach Anspruch 1, dadurch gekennzeichnet, daß zunächst die Flanken in vorzugsweise zwei aufeinanderfolgenden Schneidvorgängen ohne Oszillation des Schneidwerkzeugs vorgeschnitten werden und daß anschließend bei einem dritten Schneidvorgang das Schneidwerkzeug oszillierend aufwärts und abwärts bewegt wird.

3. Verfahren nach Anspruch 1 oder 2, dadurch gekennzeichnet, daß das rotierende Schneidwerkzeug mit einer Geschwindigkeit von sieben bis acht Doppelhüben pro Sekunde aufwärts und abwärts bewegt wird.

4. Einteilschnecken-Schneidemaschine mit einer Einrichtung zum drehbaren Halten eines Rohlings (R) einer Einteilschnecke und einem auf einer Welle (2) befestigten, drehbaren Schneidwerkzeug (S), das in einem Zustand in Eingriff mit der Einteilschnecke bringbar ist, in dem die Welle (2) parallel zur Längsachse der Einteilschnecke verläuft, dadurch gekennzeichnet, daß die Welle (2) an einem ersten Schlitten (9) befestigt ist, der auf einer Führung (10) senkrecht zur Längsachse der Einteilschnecke aufwärts und abwärts bewegbar angeordnet ist.

5. Schneidemaschine nach Anspruch 4, dadurch gekennzeichnet, daß der erste Schlitten (9) mit einer von einem Motor (3) angetriebenen Schubkurbel (4) verbunden ist.

6. Schneidemaschine nach Anspruch 4 oder 5, dadurch gekennzeichnet, daß die Hubhöhe des ersten Schlittens (9) in beiden Richtungen etwa 60 mm beträgt.

7. Schneidemaschine nach einem der Ansprüche 4 bis 6, wobei die Welle (2) des Schneidwerkzeugs (S) mittels eines Riementriebs, vorzugsweise eines Zahnriementriebs, antreibbar ist, dadurch gekennzeichnet, daß ein erster Zahnriemen (12) ein von einem Motor (1) angetriebenes erstes Zahnrad mit einem Zwischenzahnrad (13) verbindet, das über einen zweiten Zahnriemen(14) ein auf der Welle (2) des Schneidwerkzeugs sitzendes drittes Zahnrad (15) antreibt, und daß das Zwischenzahnrad (13) auf einem verschieblich gelagerten zweiten Schlitten (16) angeordnet ist.

8. Schneidemaschine nach Anspruch 7, dadurch gekennzeichnet, daß der zweite Schlitten (16) in einer zur Führung des ersten Schlittens (9) senkrechten Richtung bezüglich der Einteilschnecke vorwärts und rückwärts bewegbar geführt ist.

9. Schneidemaschine nach einem der Ansprüche 4 bis 8, dadurch gekennzeichnet, daß der erste Schlitten (9) mit dem Schneidwerkzeug, die Schubkurbel (4) und der zugehörige Riementrieb an einem Rahmen (6) befestigt sind, der um eine zur Längsachse der Einteilschnecke senkrechte Achse (7) um 90 Grad schwenkbar gelagert ist.

10. Schneidemaschine nach Anspruch 9, dadurch gekennzeichnet, daß die jeweilige Arbeitslage des schwenkbaren Rahmens (6) pneumatisch verriegelbar ist.

11. Schneidemaschine nach Anspruch 10, dadurch gekennzeichnet, daß in der jeweiligen Arbeitslage ein pneumatisch beaufschlagter Verriegelungsbolzen (25) mit einem im wesentlichen konisch sich verjüngenden Kopfabschnitt (26) in eine entsprechend geformte Aussparung (27) des verschwenkbaren Rahmens (6) eintritt.

## Claims

1. A method of cutting the flanks of one-piece worms, in which a cutting tool (S) rotating at high speed with its axis of rotation parallel to the longitudinal axis (AR) of a one-piece worm is brought into contact with a blank (R) for a one-piece worm rotating at low speed, while the cutting tool (S) or the one-piece worm is moved at a variable speed in the axial direction, characterised in that the rotating cutting tool is moved oscillating upwards and downwards at right angles to the longitudinal axis of the one-piece worm.

**2.** A method according to Claim 1, characterised in that the flanks are first pre-cut, preferably in two successive cutting operations without oscillation of the cutting tool, and that the cutting tool is subsequently moved oscillating upwards and downwards for a third cutting operation.

**3.** A method according to Claims 1 or 2, characterised in that the rotating cutting tool is moved upwards and downwards at a speed of seven to eight up-and-down strokes per second.

**4.** A cutting machine for a one-piece worm with a device for holding a blank (R) for a one-piece worm so that it can rotate, and a rotatable cutting tool (S) secured to a shaft (2), which cutting tool can be brought into contact with the one-piece worm in a state in which the shaft (2) is parallel to the longitudinal axis of the one-piece worm, characterised in that the shaft (2) is fastened to a first slide (9) which is disposed on a guide (10) so that it can move upwards and downwards at right angles to the longitudinal axis of the one-piece worm.

**5.** A cutting machine according to Claim 4, characterised in that the first slide (9) is attached to a thrust crank (4) driven by a motor (3).

**6.** A cutting machine according to Claim 4 or 5, characterised in that the length of stroke of the first slide (9) is about 60 mm in each direction.

**7.** A cutting machine according to any one of Claims 4 to 6, wherein the shaft (2) of the cutting tool (S) can be driven by a belt drive, preferably a toothed belt drive, characterised in that a first toothed belt (12) connects a first toothed wheel driven by a motor (1) to an intermediate toothed wheel (13) which drives a third toothed wheel (15) mounted on the shaft (2) of the cutting tool via a second toothed belt (14), and that the intermediate toothed wheel (13) is disposed on a second slide (16) which is mounted so that it is movable.

**8.** A cutting machine according to Claim 7, characterised in that the second slide (16) is guided so that it can move backwards and forwards in relation to the one-piece worm in a direction at right angles to the guide for the first slide (9).

**9.** A cutting machine according to any one of Claims 4 to 8, characterised in that the first slide (9) with the cutting tool, the thrust crank (4) and the associated belt drive are fastened to a frame (6) which is mounted so that it can pivot about an axis (7) at right angles to the longitudinal axis of the one-piece worm.

**10.** A cutting machine according to Claim 9, characterised in that each working position of the pivoting frame (6) can be locked pneumatically.

**11.** A cutting machine according to Claim 10, characterised in that a pneumatically activated locking pin (25) with a tapered, substantially conical head section (26) enters a correspondingly shaped recess (27) in the pivoting frame. (6).

**Revendications**

**1.** Méthode de coupe des flancs de vis sans fin d'une seule pièce, méthode dans laquelle un outil de coupe (S) tournant à grande vitesse et dont l'axe de rotation est parallèle à l'axe longitudinal (AR) d'une vis sans fin, est amené en prise avec une ébauche (R), tournant à faible vitesse d'une vis sans fin, tandis que l'outil de coupe (S) ou bien la vis sans fin est déplacé en direction axiale à une vitesse variable, méthode caractérisée en ce que l'outil de coupe en rotation est déplacé d'un mouvement oscillant vers le haut et vers le bas perpendiculairement à l'axe longitudinal de la vis sans fin.

**2.** Méthode selon la revendication 1, caractérisée en ce que les flancs sont tout d'abord prédécoupés, de préférence dans deux processus de coupe successifs, sans oscillation de l'outil de coupe, et qu'ensuite dans un troisième processus de coupe, l'outil de coupe est déplacé d'un mouvement oscillant vers le haut et vers le bas.

**3.** Méthode selon la revendication 1 ou la revendication 2, caractérisé en ce que l'outil de coupe en rotation est déplacé vers le haut et vers le bas avec une fréquence de 7 à 8 double courses par seconde.

**4.** Machine de coupe de vis sans fin avec un dispositif pour maintenir en rotation une ébauche (R) d'une vis sans fin et avec un outil de coupe (S) fixé sur un arbre (2) et susceptible de tourner, et qui peut être amené dans une situation dans laquelle il est en prise avec la vis sans fin et dans laquelle l'arbre (2) s'étend parallèlement à l'axe longitudinal de la vis sans fin, machine caractérisée en ce que l'arbre (2) est fixé sur un premier chariot (9) qui est disposé de façon à pouvoir être déplacé vers le haut et vers le bas, sur un guidage (10) perpendiculaire à l'axe longitudinal de la vis sans fin.

5. Machine de coupe selon la revendication 4, caractérisée en ce que le premier chariot (9) est relié à une manivelle de poussée (4) entraînée par un moteur (3).

6. Machine de coupe selon la revendication 4 ou la revendication 5, caractérisée en ce que la hauteur de course du premier chariot (9) dans les deux directions est d'environ 60 mm.

7. Machine de coupe selon une des revendications 4 à 6, machine dans laquelle l'arbre (2) de l'outil de coupe (S) est susceptible d'être entraîné au moyen d'une courroie d'entraînement, de préférence une courroie d'entraînement crantée, machine caractérisée en ce qu'une première courroie crantée (12) relie une première roue dentée entraînée par un moteur (1) à une roue dentée intermédiaire (13), qui, par l'intermédiaire d'une seconde courroie crantée (14) entraîne une troisième roue dentée (15) placée sur l'arbre (2) de l'outil de coupe, et en ce que la roue dentée intermédiaire (13) est disposée sur un second chariot (16) monté de façon à pouvoir se déplacer.

8. Machine de coupe selon la revendication 7, caractérisée en ce que le second chariot (16) est guidé de façon à pouvoir se déplacer en avant et en arrière par rapport à la vis sans fin dans une direction perpendiculaire au guidage du premier chariot (9).

9. Machine de coupe selon une des revendications 4 à 8, caractérisée en ce que le premier chariot (9) avec l'outil de coupe, la manivelle de poussée (4) et la courroie d'entraînement correspondante sont fixés sur un châssis (6) qui est monté de façon à pouvoir pivoter de 90° sur un axe (7) perpendiculaire à l'axe longitudinal de la vis sans fin.

10. Machine de coupe selon la revendication 9, caractérisée en ce que la position respective de travail du cadre pivotant (6) est susceptible d'être verrouillée pneumatiquement.

11. Machine de coupe selon la revendication 10, caractérisée en ce que, dans la position de travail respective, un goujon de verrouillage (25) sollicité pneumatiquement pénètre avec une partie de tête (26) allant en se rétrécissant coniquement, dans un évidement (27) conformé de façon correspondante du châssis pivotant (6).

FIG.1

FIG.2

FIG.3

FIG. 4

FIG.5